# EUROPEAN PATENT APPLICATION

(11) **EP 4 418 604 A1**
(43) Date of publication of application: **21.08.2024**
(21) Application number: 23157603.4
(22) Date of filing: 20.02.2023
(51) Int. Cl.: H04L 9/08, H04L 9/32, H04L 9/00

(54) **COMPUTER-READABLE MEDIUM RELATING TO TRUST RELATIONSHIPS BETWEEN A FIRST PARTY AND A SECOND PARTY, METHOD FOR A BACKEND, COMPUTER PROGRAM FOR A BACKEND, BACKEND SEARCH METHOD, UPDATE METHOD, COMPUTER PROGRAM FOR AN ELECTRONIC DEVICE, ELECTRONIC DEVICE, AND FIRST VEHICLE, IN PARTCIULAR UTLITY VEHICLE**

(71) Applicant: ZF CV Systems Global GmbH, 3006 Bern (CH)
(72) Inventor: FEYERABEND, Konrad, 30625 Hannover (DE); MEYER-RÖSSLER, Philip, 31180 Giesen (DE); REHM, Florian, 30974 Wennigsen (DE); RUMYANTSEV, Vladislav, 30449 Hannover (DE)
(74) Representative: Schäferjohann, Volker

(57) **Abstract**

A computer-readable medium (50) comprising a mesh (200) with a public key infrastructure relating to trust relationships between a first party (P1) and a second party (P2), wherein the mesh (200) comprises: a first party chain (205) representing the first party (P1) and comprising a first root element (210, 215), a first mesh element (210, 211) and a first element (210); a second party chain (206a) representing the second party (P2) and comprising a second root element (210, 216a) and a second element (210, 218a); wherein each of the root elements (210, 215, 216a) comprises a signature (S) signed by a root certification authority (RCA) of the respective party (P1, P2) and a corresponding root public key (RPK) for validating signatures (S); the first mesh element (210, 211) comprises a signature (S) signed by the root certification authority (RCA) of the first party (P1), a mesh public key (MPK) for validating a signature (S) signed by a mesh certification authority (MCA) of the first party (P1) and a predecessor sibling hash (PSH) of the first root element (210, 215); the first element (210) comprises a signature (S) signed by the mesh certification authority (MCA) of the first party (P1), the mesh public key (MPK), a predecessor sibling hash (PSH) of a preceding element (210) in the first party chain (205), and a neighbor link (NL) to a second linked element (220a) of the second party chain (206a); and the second element (210, 218a) comprises a neighbor link (NL) to a first linked element (210) of the first party chain (205).

## Description

The disclosure relates to a computer-readable medium comprising a mesh with a public key infrastructure relating to trust relationships between a first party and a second party. The disclosure further relates to a method for a backend of a first party for managing trust relationships between the first party and a second party, to a method for a backend of a second party for managing relationships between a first party and the second party, to a computer program for a backend, to a backend, to a search method for an electronic device of a first party to search a trust relationship with a second electronic device of a second party, to an update method for an electronic device of a first party to update a public key infrastructure mesh, to a computer program for an electronic device, to an electronic device and to a first vehicle in particular utility vehicle, of a first party.

In other words, the disclosure relates to automotive and non-automotive electronically interconnected and/or communicating devices with a demand for a secure communication.

Electronic devices are often operated as part of a network. Typically, devices as units from different manufacturers, as an example of so-called parties, may communicate with each other in such a network. To protect the authenticity, integrity and optionally also the confidentiality of the data in such a network, communication security protection is to be applied. This means that a common root of trust between the parties must be established. Based on the common root of trust, a trust relationship between the parties may be established in order to enable a security protected communication between the devices of the different parties.

An assignment of an overarching authority for provisioning of the root of trust to a plurality of parties is known from the prior art and may be performed in the on-board communication of components a vehicle. For example, an original equipment manufacturer, OEMs, may equip 3rd party devices with the root certificates of the OEM to establish a chain of trust, mainly to enable secure on-board communication. However, this may not sufficiently cover the use-case for secure external communication, i.e., for communication between devices of different vehicles and/or of different parties.

Typically, each party, e.g., manufacturer, provider and/or supplier of a device, maintains its own public key infrastructure, PKI, with a root certificate authority, RCA, associated with this particular party only. The RCA provides a root public key and a root private key as a pair of keys, wherein the root private key is secret and may be used to sign data, and the root public key is public and may be used to validate data which is signed by the root private key. However, the above-described overarching authority may not be feasible with a plurality of parties, since such an authority would have to operate with a plurality of manufacturers and service providers, potentially worldwide. This would cause an enormous maintenance effort accumulated to the operator of the authority. Also, it could be difficult to prove the neutrality of such an authority. Thus, achieving a commitment of all relevant parties to this authority may be challenging.

In principle, it is imaginable to introduce a global, e.g., a world-wide operating global authority providing the common "root of trust". Even in case of a limitation to an operational area of vehicles, this solution may fail to work due to several practical reasons: First, it requires an enormous effort being concentrated to one organization to maintain trust-relationships combined with time-criticality, e.g., in case of initial accreditations of participants, frequent audits, regular maintenance and/or security incident response. Second, neutrality may be biased, since the authority must provide equal terms and conditions, such as access eligibility, to all possible participants regardless of business dimension, e.g., global OEMs, local OEMs, Tier1s, local supplier, etc., business area, e.g., truck, trailer, smart infrastructure, fleets, digital services, etc., and company location. Third, even due to technical reasons the capabilities of such a global authority might be unbalanced, e.g., as a result of regional differences in the available infrastructure. Thus, it might be difficult to provide valid evidence for neutrality, which may lead to loss of acceptance.

WO 2020/118146 A1 discloses a system, methodologies and components for managing trust across multiple Root Certificate Authorities using both electors and regional Certificate Trust Lists (CTLs). Accordingly, systems and methodologies are disclosed for managing trust across multiple Root CAs and performing such management in an efficient way. More specifically, systems and methodologies are disclosed that implement a V21 and/or V2X PKI technology implementation. Therein, the system for managing trust across a plurality of root certificate authorities for use in vehicle-to- vehicle (V2V) communication between at least two of a plurality of transportation vehicles in the form of continuous broadcast of Basic Safety Messages (BSMs) comprises: transportation vehicle equipment located on a transportation vehicle of the plurality of transportation vehicles, the transportation vehicle equipment including a transceiver and at least one processor controlling the transceiver, wherein the at least one processor is configured to control the transceiver to provide V2V communication via at least one communication link between the transportation vehicle equipment of the transportation vehicle and transportation vehicle equipment of other transportation vehicles of the plurality of transportation vehicles, wherein communication link is provided via either direct radio link or communication via mobile- radio network, wherein communication of the BSMs on the communication link is secured via root certificate such that each BSM is digitally signed using a root certificate associated with the transportation vehicle transmitting a BSM; and at least one regional root certificate authority of a plurality of regional root certificate authorities that dictate whether identities that associate root certificates with respective transportation vehicles of the plurality of transportation vehicles are legitimate for the jurisdiction for the at least one regional authority. Therein, the regional authority (e.g., a security credential management system ("SCMS") Manager or a Certificate Policy Authority (CPA) of a C-ITS credential management system ("CCMS") can decide, which subset of the global electors are legitimate within their regional jurisdiction by identifying their certificates.

EP 3 157 281 A1 discloses a method for protected communication by a vehicle, comprising the steps of: generating a key pair consisting of a private key and a public key and/or one or more symmetric keys for the vehicle or for a control unit of the vehicle in the area of influence of the vehicle manufacturer, wherein a generating of the key pair and/or of the one or more symmetric keys for the vehicle or for a control unit of the vehicle results in a serial number of the vehicle and/or of the control unit being stored in the area of influence of the vehicle manufacturer; generating a first certificate using the key pair, introducing the key pair and the first certificate and/or the symmetric key or the multiple symmetric keys into the vehicle or the control unit, in the form of an encrypted and signed key data record; authenticating the vehicle or the control unit to a new communication partner by generating a new key pair for this communication path and sending a signed message together with the first certificate, wherein a master key is generated in the area of influence of the vehicle manufacturer and all of the keys used in the vehicle are generated by deterministic derivation from the master key, wherein a fresh request for a key pair and/or a key, if a serial number of the vehicle or of the control unit is not concordant with the stored serial number, results in the calculation of a new key pair and/or key to be transmitted to the vehicle or to the control unit being preceded by a key identity counter of the key pair and/or key being incremented and a new key being generated thereby, wherein the vehicle or the control unit accepts the new key pair and/or the key or the multiple keys only if the included key identity counter is greater than or equal to the currently stored key identity counter, and authenticating the new communication partner to the vehicle or the control unit using a signed message and a public key of the new communication partner, which are produced by the new communication partner on the basis of a certification by the vehicle manufacturer.

Furthermore, in principle, a device provision with root certificates of all possible communication counterparts is possible. The disadvantages of this method are: First, periodic in-field updates of the device's security sensitive components may be necessary, wherein, however, the introduction of new root certificates may lead to increased security vulnerability of the entire system. Second, omnipresent in-field impasses may occur due to missing root certificates.

DE 10 2015 220 226 A1 discloses a method for certification by a control unit of a vehicle, comprising the steps of: generation of a first signed certificate, comprising at least one public key and containing a vehicle-specific feature, and a private key associated therewith; one-time introduction of the first signed certificate and the associated private key into the control unit; signing of a second certificate, comprising an additional public key, in the control unit, by means of the private key associated with the first signed certificate; and provision of the second signed certificate together with the first signed certificate.

The problem of the disclosure is to provide a technological contribution to the art. A specific embodiment of the present disclosure may solve the problem of providing an alternative measure to enable an effective communication security protection for the communication between devices of different parties.

According to an aspect of the disclosure, a computer-readable medium comprising a mesh with a public key infrastructure relating to trust relationships between a first party and a second party is provided. Therein, the mesh comprises: a first party chain representing the first party and comprising a first root element, a first mesh element and a first element; a second party chain representing the second party and comprising a second root element and a second element; wherein each of the root elements comprises a signature signed by a root certification authority of the respective party and a corresponding root public key for validating signatures; the first mesh element comprises a signature signed by the root certification authority of the first party, a mesh public key for validating a signature signed by a mesh certification authority of the first party and a predecessor sibling hash of the first root element; the first element comprises a signature signed by the mesh certification authority of the first party, the mesh public key, a predecessor sibling hash of a preceding element in the first party chain, and a neighbor link to a second linked element of the second party chain; and the second element comprises a neighbor link to a first linked element of the first party chain.

Therein, the mesh, also called mesh structure, relates to a data structure of elements. The data structure may be stored on the computer-readable medium. The mesh may provide a common root of trust for the parties being represented and/or are to be represented by elements in the mesh for establishing secured communication between two or more electronic devices of the different parties. The mesh, i.e., the elements of the mesh may be created by the parties.

The elements may be linked to another element of the mesh and/or multiply linked to a plurality of elements of the mesh. An element, also called mesh element, may be the basic data entity. A plurality of elements may build and/or represent the mesh. An element may be a root element, a mesh element or a regular sibling. A link between elements may represent a trust relationship which may be validated.

Each of the first party and the second party may be an organization, such as a company, a subsidiary of a company and/or a company segment, which may be represented in the mesh or intended to be represented in the mesh.

Elements may be organized in a party chain. The party chain may be a linked list of elements representing the same party.

Each of the party chains comprises a root element corresponding to the respective party. The root element of a party chain may be an initial element of the party chain. The root element comprises a signature signed by a root certification authority of the respective party and a corresponding root public key for validating signatures. This enables that each of the parties may maintain its public key infrastructure, PKI.

The first mesh element, or a mesh element in general, may be the element following, i.e., succeeding, the root element of the party chain. Thus, the first root element may be a predecessor of the first mesh element. The first mesh element may be a sibling of the first root element. The first mesh element comprises a signature signed by the root certification authority of the first party, a mesh public key for validating a signature signed by a mesh certification authority of the first party and a predecessor sibling hash of the first root element, i.e., a root hash.

The root hash may enable a validation of the first root element. The signature of the first mesh element may be validated by the root public key of the first party which is comprised by the first root element. Thus, between the first root element and the first mesh element a forgery-proofed relationship may be established by validating the first root element, by the first mesh element, and the first mesh element, by the first root element.

The first element comprises a signature signed by the mesh certification authority of the first party, the mesh public key, a predecessor sibling hash of a preceding element in the first party chain, and a neighbor link to a second linked element of the second party chain; and the second element comprises a neighbor link to a first linked element of the first party chain.

If the first element is a direct successor of the first mesh element, i.e., the fist element succeeds the first mesh element directly, the predecessor sibling hash may comprise a hash value of the first mesh element to enable a validation of the first mesh element by the first element. Furthermore, the predecessor sibling hash may enable a validation of an element in the first party chain preceding the first element. Conversely, the first mesh element and/or the element of the first party chain which precedes the first element comprises optionally a link to its successor element in the first party chain, e.g., a sibling link to a direct successor element. This may enable an efficient search of a trust relationship in the mesh.

Thus, elements may be validated in a chain. The validation chain may comprise validating the mesh element and the root element.

Similarly, the neighbor link to the second linked element of the second party chain represents a trust relationship between the parties, since the neighbor link represents a trust relationship between elements of different party chains which represent different parties. Conversely, the second element comprises the neighbor link to the first linked element of the first party chain. The first linked element may be any of the elements of the first party chain. Optionally, the first linked element is the last element of the first party chain. The neighbor links enable a validation of a relationship between the parties. The second linked element may be a root element, a mesh element or a regular sibling.

The mesh provides, by its structure, which may comprise the links between the elements, the hashes, the signatures of the elements and a root certificate in the one-time-programmable memory of a device referenced by a public key, security characteristics, such as integrity and authenticity protection, non-repudiation of particular entries and the possibility of secure offline and/or infield synchronization, even from untrusted sources. This may be achieved by a combination of public key cryptography, a block chain type principle, wherein elements within the mesh are static and may not be modified, wherein new trust relationships may be established by creating elements within the mesh and enables a peer-to-peer data synchronization approach. The mesh achieves neutrality of the operators as result of the distribution of the authority empowerment. The evidence of trusted relationships between participating parties reflects the "real world" trust topology.

The mesh also provides the possibility of a certification of compatibility between interacting entities, e.g., electronic devices. Further, the mesh may be used in supply chain management, wherein the mesh provides transparent, i.e., open to the public, and consistent evidence for non-repudiation contracts between parties involved into the supply chain.

Thus, the disclosure enables a declaration, decentralized administration and application of the mesh as a data structure representing the common root of trust by documenting trusted relationships by links between elements of party chains which comprise elements that represent participating parties. The mesh may be used by communicating entities, such as devices being, e.g., produced, supplied and/or maintained, by the participating parties to setup secure communication. The mesh may be open to the public and/or may provide evidence of mutual trust for a third party.

Optionally, the first mesh element may be dispensed with to achieve a simpler mesh. However, then the first root element may not be validatable.

Optionally, the second element may be dispensed with so that the second party chain may consist of the second root element. This may achieve a simpler mesh but may be require different operations to maintain the mesh, e.g., if the root certificate authority of the second party revisions its public and private keys.

Optionally, the first element is a regular sibling, wherein the regular sibling comprises a signature signed by the mesh certification authority of the first party, a mesh public key and a predecessor sibling hash. An element of a party chain besides the root element and the mesh element may be a so-called regular sibling. The regular sibling, the first mesh element and the first root element may form a validatable chain, i.e., the first root element and the first mesh element may validate their relationship as explained above and the first mesh element and the first element may validate their relationship as explained above.

Optionally, the first element comprises a neighbor root link to the second root element and/or the second element comprises a neighbor root link to the first root element. This embodiment enables an efficient search and/or validation of trust relationships between different parties. In other words, this enables an efficient search and/or validation between elements of different, i.e., neighboring party chains. The neighbor root link of an element of a party enables a direct validation of the root element of the other, i.e., neighboring, party. Alternatively or additionally, the first element comprises and/or the second element comprises a sibling link which links the respective element to a predecessor element.

Optionally, the second linked element is the last element of the second party chain. This enables a reliable and tamper-proof validation. The last element of a party chain is typically the element of the party chain which is created most recently. Thus, a link to the last element of the party chain reflects to most recent trust relationship which prevents preceding elements of the second party chain from being manipulated.

Optionally, the first element comprises a neighbor link hash of the second linked element and/or a neighbor root hash of the second root element. The neighbor link hash further improves security, since the neighbor link hash enables a validation of the integrity of the linked element.

According to an aspect of the disclosure, a method for a backend of a first party for managing trust relationships between the first party and a second party in a mesh as described above is provided. Therein, the method comprises: transmitting, to a backend of the second party, the mesh; receiving, from the backend of the second party, an updated mesh, wherein the updated mesh comprises the mesh and a second last element of the second party chain, wherein the second last element comprises a neighbor link to a last element of the first party chain within the updated mesh; validating the updated mesh; and transmitting, to the backend of the second party, a second updated mesh with the updated mesh and a further element representing the first party, becoming the last element of the first party chain within the second updated mesh and comprising a neighbor link to second last element of the second party chain.

According to an aspect of the disclosure, a method for a backend of a second party for managing relationships between a first party and the second party in a mesh as described above is provided. Therein, the method comprises: receiving, from the backend of the first party, the mesh; validating the mesh; transmitting, to the backend of the first party, an updated mesh with a second last element of the second party chain wherein the second last element comprises a neighbor link to a last element of the first party chain within the updated mesh; receiving, from the backend of the first party, a second updated mesh with the updated mesh and a further element representing the first party, becoming the last element of the first party chain within the second updated mesh and comprising a neighbor link to second last element of the second party chain; and validating the second updated mesh.

Each of the method for the first backend and the method for the second backend provides a tamper-proof documentation of mutual potentially trusted relationships between parties in terms of cyber security or other categories. The methods enable maintaining the mesh and thus the trust relationships between the parties in a block chain type manner, i.e., the mesh may be only expanded to the updated mesh and/or the second updated mesh by creating and adding new elements to represent new and/or changed trust relationships as a non-repudiation contract and/or relationship between the involved parties.

Each of the method for the first backend and the method for the second backend may comprise one or more optional features relating to one or more optional features as described above with reference to the mesh to achieve a corresponding technical effect.

According to an aspect of the disclosure, a computer program for a backend, is provided. Therein, the computer program comprises instructions which, when the program is executed by a processor, causes the processor to carry out the method as described above. Optionally, the computer program comprises instructions which, when the program is executed by a processor, causes the processor realize one or more optional features of the method relating to one or more optional features as described above with reference to the mesh to achieve a corresponding technical effect.

According to an aspect of the disclosure, a backend is provided. Therein, the backend is adapted to perform the method as described above. Optionally, the backend is adapted to realize one or more optional features relating to one or more optional features as described above with reference to the mesh to achieve a corresponding technical effect. The backend may be a software and/or a hardware which may be maintained, provided and/or used by one of the parties to manage trust relationships by the mesh. Optionally, the backend is adapted to perform backend operations, such as validating the mesh, adding a new trusted relationship to the mesh, updating the mesh, merging meshes and/or uniting meshes.

According to an aspect of the disclosure, a search method for an electronic device of a first party to search a trust relationship with a second electronic device of a second party is provided. Therein, the electronic device comprises a memory storing a mesh as described above, and the search method comprises: iterating, starting with the first root element of the mesh, through the first party chain; following any neighbor link of the elements of the first party chain to second elements of the second party chain; validating the second elements of the second party chain; and outputting a trust relationship result.

Therein, the mesh may be considered as an input to the method. I.e., the method may be performed on a data structure that represents the mesh and that may be stored on a computer-readable medium. The trust relationship result may be of a Boolean type, i.e., the trust relationship result may characterize whether a trust relationship is found and may be established between two devices, or none trust relationship is found.

Optionally, the mesh comprises a plurality of more than two party chains, wherein the following the neighbor links of the elements of the first party chain to second elements of the second party chain is succeeded by following of a neighbor link of the second elements of the second party chain to third elements of a third party chain. This may be performed in a breadth-first search manner, i.e., instead of first following the neighbor links to elements of neighboring party chains, through one of the party chains is iterated first. This may enable to first assess more trustworthy relationships between parties being represented by directly neighboring party chains than to assess relationships with potentially next-nearest neighbors, next-next-nearest neighbors and so on.

The search method may comprise one or more optional features relating to one or more optional features as described above with reference to the mesh to achieve a corresponding technical effect.

Optionally, when iterating through the first party chain, the method may comprise validating elements of the first party chain. This may enhance the security, since a conflict in the first party chain may be discovered.

Optionally, when validating the second elements of the second party chain, elements of the first party chain are validated. This may enhance the integrity of the mesh if new links between neighbor elements are to be generated.

According to an aspect of the disclosure, an update method for an electronic device of a first party to update a public key infrastructure mesh as described above is provided. Therein, the update method comprises: receiving, from a second electronic device of a second party, a second mesh hash value of the mesh being stored by the second electronic device; comparing a first mesh hash value of the mesh being stored by the electronic device of the first party and the second mesh hash value; and updating, based on comparing the first mesh hash value with the second mesh hash value, the mesh being stored by the electronic de vice. Comparing the mesh hash values may enable an efficient update procedure, since an update may not be necessary if, based on the mesh hash values, it is determined that the meshes are identical. Alternatively, the receiving the second mesh hash value and the comparing the first mesh hash value with the second mesh hash value may be dispensed with. In this case, updating the mesh being stored by the electronic device may be performed.

The update method may enable a peer-to-peer synchronization, i.e., a synchronization between electronic devices. The update method may be performed offline, i.e., without access to the internet. Therein, it is realized that a trusted relationship between a first party and a second party and a trusted relationship between the second party and a third party may establish a trusted relationship between the first party and a third party. Alternatively or additionally, the trusted relationship between two parties may be used to acknowledge changes in the mesh, i.e., to update the mesh while conserving the trusted relationship.

The update method may comprise one or more optional features relating to one or more optional features as described above with reference to the mesh to achieve a corresponding technical effect.

According to an aspect of the disclosure, a computer program for an electronic device, is provided. Therein, the computer program comprises instructions which, when the program is executed by a processor, causes the processor to carry out the search method and/or the update method as described above. Optionally, the computer program comprises instructions which, when the program is executed by a processor, causes the processor realize one or more optional features of the search method and/or the update method relating to one or more optional features as described above with reference to the mesh to achieve a corresponding technical effect.

According to an aspect of the disclosure, an electronic device is provided. The electronic device comprises and/or is adapted to read a computer-readable medium comprising a mesh as described above. Optionally, the mesh comprises one or more optional features as described above with reference to the mesh to achieve a corresponding technical effect.

The electronic device may be a device of the first party and may, by using the mesh, be interconnected to an electronic device of the second party, to a digital service provider of the second party, to a smart infrastructure of the second party, to a fleet operator of the second party and/or to a governmental authority being provided by a second party. By using the mesh as a common root of trust, the mesh reflects that for such an interconnection, the fulfillment of the trust criteria may be reviewed, security processes, policies, PKI and/or tools are verified, a security incident response audits may be given, an access restriction to the sensitive areas may be guaranteed. The mesh may then grant an admission to the opposite party for the interconnection, optionally based on a contractual agreement, which may contain obligations for both parties, e.g., frequent reports and audits and/or incident response commitment.

Optionally, the electronic device is adapted to perform the search method and/or the update method as described above. Optionally, the electronic device is adapted to perform in-field operations, such as validating the mesh, updating the mesh, merging meshes, searching trusted relationship, e.g., by a breadth-first search, authenticate a communication partner, providing a secure communication setup, e.g., based on confidence in trusted party and its chain of trust, validating the certificate chain up to device certificate, initiating challenge (private key ownership) and/or exchange symmetric key.

According to an aspect of the disclosure a first vehicle, in particular utility vehicle, of a first party is provided. Therein, the first vehicle, in particular utility vehicle, comprises an electronic device as described above. The electronics device may comprise one or more features as described above to achieve a technical effect corresponding therewith.

The first vehicle of the first party may interconnect its electronic device with an electronic device of a second vehicle of a second party. For example, the first vehicle may be a truck and the second vehicle may be a trailer. Each of the truck and the trailer may comprise such an electronic device from different parties. The mesh may be used for a truck-trailer link, i.e., for bringing together a number of trucks, e.g. OEM, and a number of trailers, e.g., OEM and Tier1, for secured communication between truck and trailer. Alternatively or additionally, the first vehicle enables a secure communication between the electronic devices and a digital service provider, e.g., via a V2X connection, e.g., V2V, smart infrastructure and/or a fleet application.

The disclosure is hereinafter described in detail with reference to the appended drawings, in which:
- Fig. 1: shows a schematic representation of a trust relationship between two parties;
- Fig. 2: shows a mesh as being comprised by a computer-readable storage medium according to an aspect of the disclosure;
- Fig. 3: shows a schematic of a computer-readable storage medium according to an aspect of the disclosure;
- Fig. 4: shows a schematic representation of a method of a backend of a first party according to an aspect of the disclosure and of a method of a backend of a second party according to an aspect of the disclosure;
- Fig. 5: shows a mesh as being comprised by a computer-readable storage medium according to an aspect of the disclosure;
- Fig. 6: shows a schematic of a computer-readable storage medium according to an aspect of the disclosure;
- Fig. 7: shows a schematic of each of a root element, of a mesh element and of a regular sibling of a mesh as being comprised by a computer-readable storage medium according to an aspect of the disclosure;
- Fig. 8: shows a schematic of a search method according to an aspect of the disclosure;
- Fig. 9: shows a schematic of an update method according to an aspect of the disclosure;
- Fig. 10: shows a schematic illustration of updating a mesh as being comprised by a computer-readable storage medium according to an aspect of the disclosure; and
- Fig. 11: shows a schematic illustration of merging a mesh as being comprised by a computer-readable storage medium according to an aspect of the disclosure.

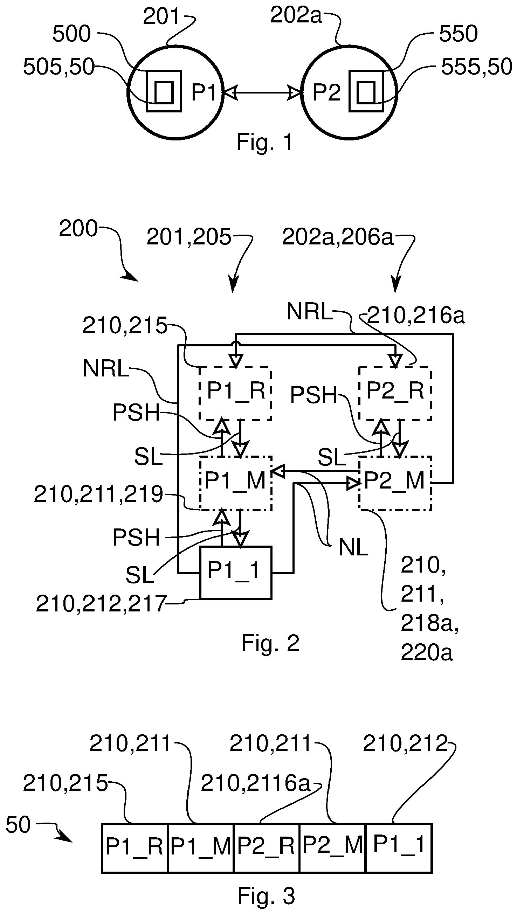

Figure 1 shows a schematic representation of a trust relationship between two parties P1, P2. A party P1, P2, is an organization, e.g., a company, a subsidiary, and/or a segment thereof, which is represented in a mesh 200 or intended to be represented in the mesh 200. The mesh 200 may represent the trust relationship between the parties P1, P2.

Each of the parties P1, P2 may manufacture, maintain and/or provide an electronic device 500, 550 with a memory 505, 555. Each of the electronic device 500, 550 may store on its memory 505, 555 as a computer-readable storage medium 50 the mesh 200. The trust relationship which is represented by the mesh 200 represents a cyber security measure for a communication connection and/or an interoperability between the electronic devices 500, 550.

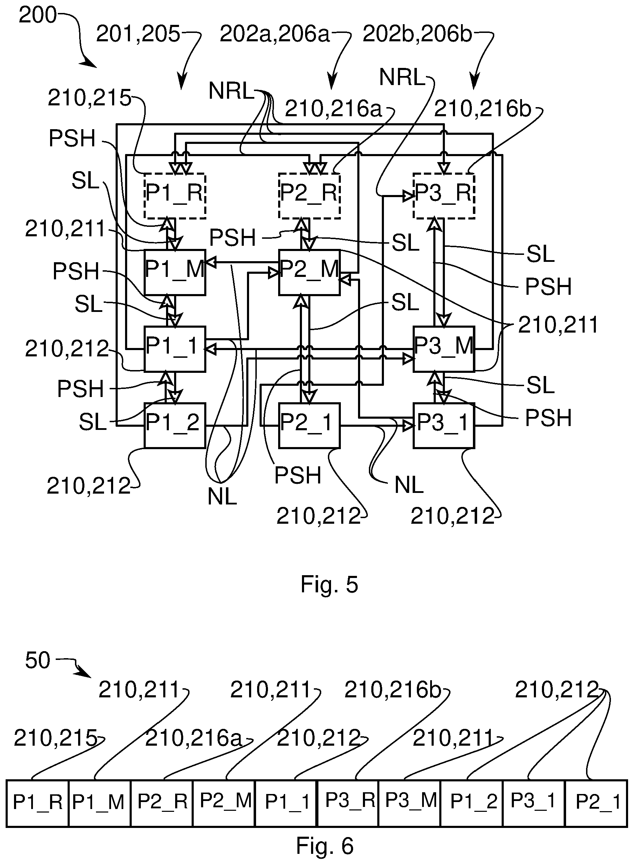

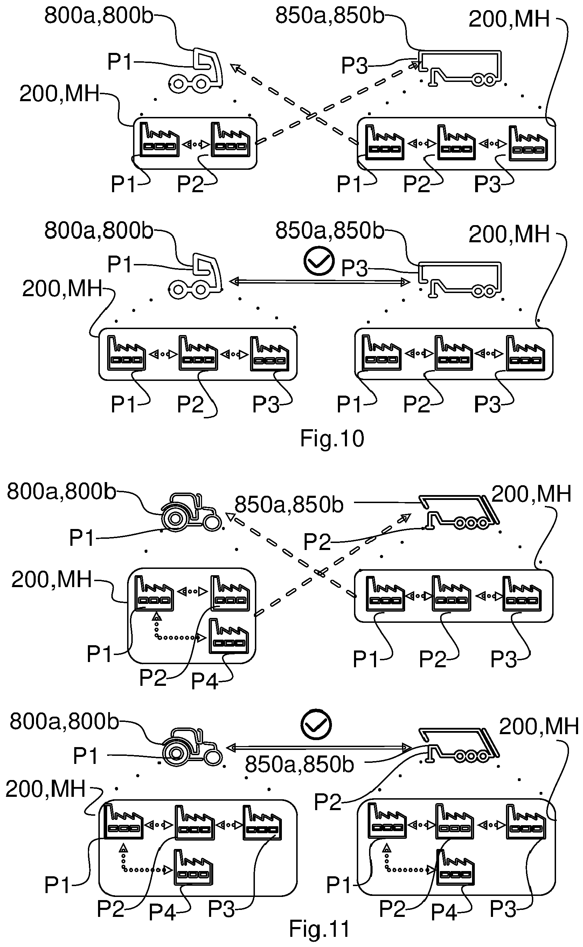

A first party P1 is a host party 201 and a second party P2 is a guest party 202a (see Figures 2 and 5). In another embodiment, see Figures 5 and 6, the mesh 200 represents trust relations between three parties P1, P2, P3. In general, a mesh 200 may represent trust relations between any number of parties P1, P2, P3, P4 (e.g., see also Figure 11).

The mesh 200 is described with reference to Figures 2, 3, 5 and 6.

Figure 2 shows a mesh 200 as being comprised by a computer-readable storage medium 50 according to an aspect of the disclosure. Figure 2 is described under reference to Figure 1 and the description thereof.

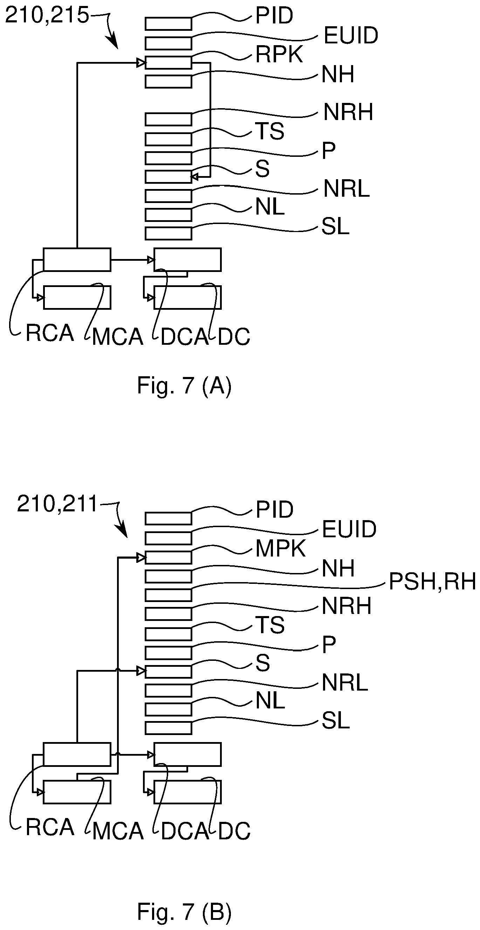

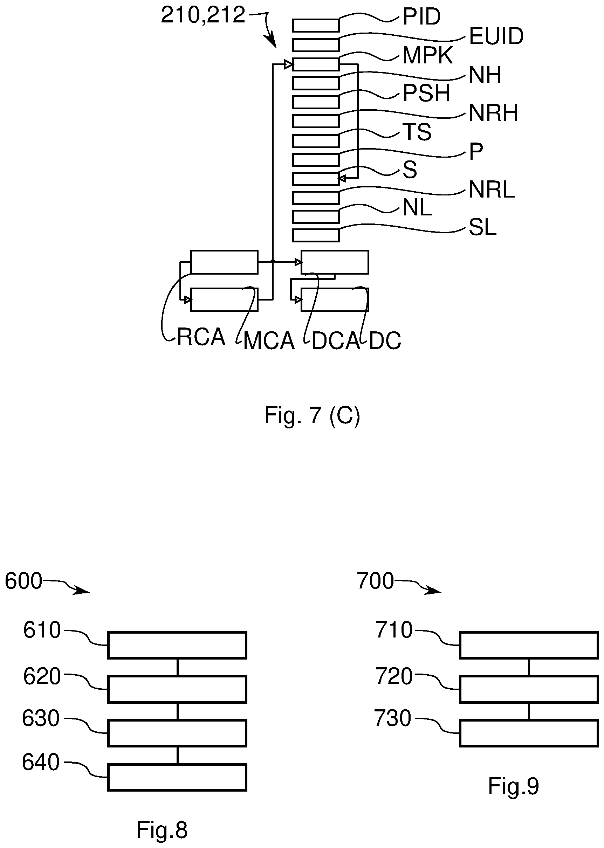

In Figure 2, the mesh 200 comprises a plurality of elements 210, each of which is illustrated by a box with an index. The elements 210 are the basic data entities building the mesh 200. The mesh 200, also called mesh structure, is a data structure of potentially multiply-linked elements 210, i.e., elements 210 that are linked between one or more other elements 210 of the mesh 200. The elements 210 are further explained with reference to Figure 7.

In Figure 2, each of the parties P1, P2 as described with reference to Figure 1 is represented in the mesh 200 by a plurality of elements 210. Therein, each of the elements 210 represents one of the parties P1, P2. In this representation, elements 210 which belong to the same of the parties P1, P2 are illustrated within the same column. The index of each of the elements 210 is representative for the party P1, P2.

Elements 210 may be comprised by a party chain 205, 206a. The party chain 205, 206a is a linked list of mesh elements 210 representing the same party P1, P2. A linked list is an ordered set of elements 210. Thus, each element 210 may have a well-defined direct predecessor and direct successor within the party chain 205, 206a. In the following, the direct predecessor and direct successor are called predecessor and successor, respectively. Furthermore, each of the party chains 205, 206a comprises a well-defined last element 217, 218a, i.e., an element 210 having no successor.

All elements 210 within the party chain 205, 206a are characterized by the same party ID, PID (see Figure 7). Each of the elements 210 is a root element 210, 215, 216a, a mesh element 210, 211 or a regular sibling 210, 212 (see also Figure 7). This is also represented in the index of each of the elements 210, i.e., a root element 210, 215, 216a is indexed by "_R", a mesh element 210, 211 is indexed by "_M" and a regular sibling 210, 212 is indexed by an additional number. In the representation of Figure 2, the party chains 205, 206a are shown in columns.

The first party chain 205 represents the first party P1 and comprises a first root element 210, 215, a first mesh element 210, 211 and a first element 210.

The second party chain 206a represents the second party P2 and comprises a second root element 210, 216a and a second element 210 being a mesh element 210, 211 and a last element 210, 218a of the second party chain 206a.

Therein, each of the root elements 210, 215, 216a is an initial element 210 of the respective party chain 205, 206a, i.e., an element 210 without a predecessor, and comprises a signature S signed by a root certification authority RCA of the respective party P1, P2 and a corresponding root public key RPK for validating signatures S. I.e., the first party chain 205 comprises a first root element 215 with a signature S signed by a first root certification authority RCA of the first party P1 and the second party chain 206a comprises a second root element 216a with a signature S signed by a second root certification authority RCA of the second party P2.

The mesh elements 210, 211 are elements 210 of the party chain 205, 206a following the root element 210, 215, 216a of the respective party chain 205, 206a. I.e., the root element 210, 215, 216a is a predecessor of a corresponding mesh elements 211. The mesh element 211 is a successor and a sibling of the root element 210, 215, 216a of the respective party chain 205, 206a. The root element 201, 215, 216a of the party chain 205, 206a is trustworthy due to a root certificate relating to the corresponding root certification authority RCA and being stored in a one-time-programmable memory 505, 555 of the respective electronic device 500, 550. A hash, optionally a root hash RH, further prevents a manipulation and/or replacement of the root element 210, 215, 216a, also by the party P1, P2 being represented by the root element 210, 215, 216a, and enables the principle of non-deniability.

The mesh elements 211 comprise a signature S signed by the root certification authority RCA of the respective party P1, P2, a mesh public key MPK for validating a signature S signed by a mesh certification authority MCA of the respective party P1, P2 and a predecessor sibling hash PSH of the root element 210, 215, 216a of the respective party chain 205, 205a. In particular, the first mesh element 210, 211 comprises a signature S signed by the root certification authority RCA of the first party P1, a mesh public key MPK for validating a signature S signed by a mesh certification authority MCA of the first party P1 and a predecessor sibling hash PSH of the first root element 210, 215. Analogously, the second mesh element 210, 211 comprises a signature S signed by the root certification authority RCA of the second party P2, a mesh public key MPK for validating a signature S signed by a mesh certification authority MCA of the second party P2 and a predecessor sibling hash PSH of the second root element 210, 216a.

The first element 210 is a regular sibling 210, 212. In another embodiment, the mesh 200 comprises a plurality of regular siblings 210, 212 (see, e.g., Figure 5). The regular siblings 210, 212 are elements 210 of respective party chain 205, 206a besides the root element 210, 215, 216a and mesh element 210, 211. The first element 210 as a regular sibling 210, 212 comprises a signature S signed by the mesh certification authority MCA of the first party P1, the mesh public key MPK, a predecessor sibling hash PSH of a preceding element 21 0in the first party chain 205, and a neighbor link NL to a second linked element 220a of the second party chain 206a. The second linked element 220a is the last element 210, 218a of the second party chain 206a.

The second element 210, 218a comprises a neighbor link NL to a first linked element 210 of the first party chain 205. The first linked element 210 is the last element 210, 217 of the first party chain 205.

The first element 210 comprises a neighbor root link NRL to the second root element 216a. The second element 210, 218a comprises a neighbor root link NRL to the first root element 215.

The first element 210 comprises a neighbor link hash NLH of the second linked element 220a and a neighbor root hash NRH of the second root element 216a. The second element 210 comprises a neighbor link hash NLH of the first linked element 219 and a neighbor root hash NRH of the first root element 215.

Each of the first root element 210, 215, the second root element 210, 216a and the first mesh element 210, 211 comprises a sibling link SL. The sibling link SL links an element 210 to its successor element 210. In another embodiment with more elements 210, also a regular sibling 210, 212 may comprise a sibling link SL to its successor element 210 (see, e.g., Figure 5).

The described links and hash values enable a validation of the relationships within the mesh 200. The links and hashes within one of the party chains 205, 206a may enable to validate the integrity of the respective party chain 205, 206a. The links and hashes to the neighboring party chain 205, 206a enables searching and validating relationships between the parties P1, P2.

A new trusted relationship in the mesh 200 requires at least one involved party P1, P2 which is already part of the mesh 200, this is the so-called host party 201. The new attendee, i.e., an attendee being represented by a new element 210, is then considered as a guest party 202a. If both parties P1, P2 are already represented in the mesh, an alignment between the parties P1, P2 can be met, e.g., the party P1 with more regular siblings 210, 212 becomes the host party 201 and the party P2 with less regular siblings 210, 212 becomes the guest party 202a.

The mesh 200 may be stored on a computer-readable storage medium 50 as described with reference to Figure 3.

Figure 3 shows a schematic of a computer-readable storage medium 50 according to an aspect of the disclosure. On the computer-readable storage medium 50 a mesh 200 as described with reference to Figure 2 is stored. Figure 3 is described under reference to Figures 1 and 2 and the description thereof.

In Figure 3, a sequence of data is shown. The sequence represents the order of elements 210 of the mesh 200 that are stored on the computer-readable storage medium 50. Therein, each element 210 is a data structure as described with reference to Figure 7.

The implementation of the mesh 200 utilizes the following basic mechanisms: cryptographic hash functions, digital signatures and X.509 digital certificates.

Therein, the hash functions map input data of arbitrary size to a fixed-size output value and provides the following properties: (i) for a random input string the probability of 2^(-n) for a particular n-bit output, (ii) unfeasible search of an input data for a given hash value, and (iii) unfeasible identification of two different inputs resulting into similar output, i.e., hash. The hash functions are applied in the mesh 200 to achieve block chain type characteristics, i.e., to avoid manipulation of the mesh elements by storing the element's hash in a successor/branch element.

The digital signature is a value calculated by cryptographic signing function for the given input by using a private key. The digital signature (value) can be validated with a cryptographic verifying function by using an original input and a public key corresponding to the private key. The signature is applied in the mesh 200 to avoid manipulation of the elements by storing the signature inside the element itself, and to ensure non-repudiation of the mesh elements, since only the owner of the private key can sign the elements.

The X.509 digital certificate is a type of an electronic document used to prove the validity of, i.A., a public key. It is applied in the mesh 200 to achieve a mutual authentication of the devices in-field and relies on the combination of the mesh 200 and a classical Chain-of-Trust consisting of digital certificates. An association of the digital certificates with the mesh 200 is achieved by storing the certificates public keys within the mesh elements 210.

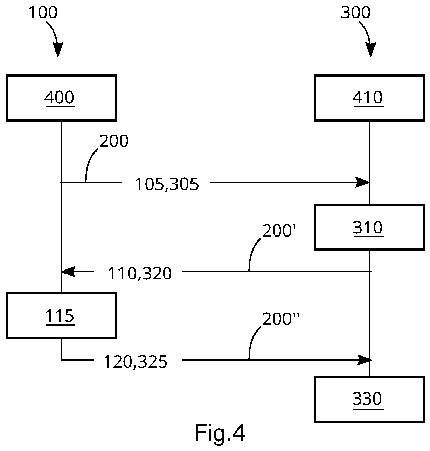

Figure 4 shows a schematic representation of a method 100 of a backend 400 of a first party P1 according to an aspect of the disclosure and of a method 300 of a backend 410 of a second party P2 according to an aspect of the disclosure. Figure 4 is described under reference to Figures 1 to 3 and the description thereof.

In Figure 4, each of the backend 400 of the first party P1 and the backend 410 of the second party P2 is and/or is run by a server which is used by one of the parties P1, P2 to manage trust relationships by maintaining a mesh 200. It is possible that the backend 400 of the first party P1 comprises the mesh 200, and the second party P2 is to be represented in the mesh 200 as explained below, or the second party P2 is represented in the mesh 200 and an additional trust relationship by an additional element 210 is to be created.

In Figure 4, a left column illustrates the method 100 for the backend 400 of the first party P1 for managing trust relationships between the first party P1 and the second party P2 in the mesh 200. A right column illustrates the method 300 for the backend 410 of the second party P2 for managing relationships between the first party P1 and the second party P2 in the mesh 200. Steps of the methods 100, 300 are indicated line by line. Therein, an interaction between the backend 400 of the first party P1 and the backend 410 of the second party P2 is indicated by an arrow between the left and the right column. The backend 400 of the first party P1 may represent a host party 201 and the backend 400 of the second party P2 may represent a guest party 202a.

The method 100 for the backend 400 of the first party P1 comprises transmitting 105, to the backend 410 of the second party P2, the mesh 200. Conversely, the method 300 of the backend 410 of the second party P2 comprises receiving 305, from the backend 400 of the first party P1, the mesh 200. I.e., the host party 201 provides the up-to-date version of the mesh 200 to a new guest party 202a which is to be represented in the mesh 200.

The backend 410 of the second party P2 performs validating 310 the mesh 200. The guest party 202a validates the received mesh 200.

The backend 410 of the second party P2 performs transmitting 320, to the backend 400 of the first party P1, an updated mesh 200' with a second last element 218a of the second party chain 206a wherein the second last element 218a comprises a neighbor link NL to a last element 210, 217 of the first party chain 205 within the updated mesh 200'. Conversely, the backend 400 of the first party P1 performs receiving 110, from the backend 410 of the second party P2, the updated mesh 200'. I.e., the guest party 202a creates a new root element 210, 216a and a new mesh element 210, 211 if the second party P2 is new to the mesh 200, i.e., no element 210 of the mesh 200 represents the second party P2, otherwise the guest party 202a creates a regular sibling 210, 212 and updates the sibling link SL of the own party chain predecessor element 210. The neighbor link NL of the new element 210 being a mesh element 210, 211 or a regular sibling 210, 212 is set to the last element 210, 217 in the host party chain 205. The neighbor root link NRL of the new element 210 is set to the first root element 210, 215 of the host party chain 205. The neighbor hash NH and neighbor root hash NRH values are set accordingly to the linked elements 210 of the neighbor party-chain. The guest party 202a provides the updated mesh 200' to the host party 201.

The backend 400 of the first party P1 performs validating 115 the updated mesh 200'. I.e., the host party 201 validates the received updated mesh 200'.

The backend 400 of the first party P1 performs transmitting 120, to the backend 410 of the second party P2, a second updated mesh 200" with the updated mesh 200' and a further element 210 representing the first party P1, becoming the last element 210, 217 of the first party chain 205 within the second updated mesh 200" and comprising a neighbor link NL to second last element 218a of the second party chain 206a. Conversely, the method 300 of the backend 410 of the second party P2 comprises receiving 325, from the backend 400 of the first party P1, the second updated mesh 200". I.e., the host party 202 creates a new regular sibling 210, 212 and updates the sibling link SL of the own party-chain predecessor element 210. The neighbor link NL of the new regular sibling 210, 212 is set to the last, i.e., the new, element 210, 218a in the guest party-chain 206a. The neighbor root link NRL of the new regular sibling 210, 212 is set to the second root element 210, 216a of the guest party chain 206a. The neighbor hash NH and neighbor root hash NRH values are set accordingly. The host party 201 provides the second updated mesh 200" to the guest party 202a.

The backend 410 of the second party P2 performs validating 330 the second updated mesh 200". I.e., The guest party 202a validates the received second updated mesh 200".

Now the trusted relationship between the parties P1, P2 is represented as a pattern of connected mesh elements 210. Both parties P1, P2 may equip electronic devices 500, 550 with the updated mesh 200", e.g., by end-of-life production and/or in-field updates.

The block chain type characteristic of the mesh 200 is given by the concatenation of elements 210, wherein elements 210 may not to be removed and/or manipulated. However, in a block chain, hash values are concatenation and may not to be removed and/or manipulated.

Figure 5 shows a mesh 200 as being comprised by a computer-readable storage medium 50 according to an aspect of the disclosure. Figure 5 shows a mesh 200 with elements 210 that represent three parties P1, P2, P2. Figure 5 is described under reference to Figure 2 and the description thereof, wherein differences are explained.

In Figure 5, the first party P1 is the host party 205, the second party P2 is the guest party 206a, a third party P3 is a guest party 206b for the first party P1, and P2 is a host party for the third party P3. Since the trust relationship between the parties P1, P2, P3 is more complex than the trust relationship between the parties P1, P2 of Figure 2, the mesh 200 in Figure 5 comprises more elements 210 and correspondingly more links between the elements 210. The third party P3 is represented by elements 210 in a third party chain 206b, analogous to the first party chain 205 and the second party chain 206a.

Each of the elements 210 comprises a single neighbor link NL and a single neighbor root link NRL. Thus, the first party chain 205 comprises two regular siblings 210, 212 to provide links to elements 210 of the neighboring party chains 206a, 206b. Specifically, the first party chain 205 comprises an element 210 with a neighbor link NL to an element 210 of the second party chain 206a and a neighbor root link NRL to the second root element 216a, and an element 210 with a neighbor link NL to an element 210 of the third party chain 206b and a neighbor root link NRL to a third root element 216b being a root element 210, 216b of the third party chain 206b.

Each of the second party chain 206a and third-party chain 206b comprises a root element 210, 216a, 216b, a mesh element 210, 211 and a single regular sibling 210, 212. Therein, each of the mesh elements 210, 211 links the respective party chain 206a, 206b to the first party chain 205 and the regular sibling 210, 212 links the respective party chain 206a, 206b to the other guest party chain 206b, 206a.

Figure 6 shows a schematic of a computer-readable storage medium 50 according to an aspect of the disclosure. On the computer-readable storage medium 50 a mesh 200 as described with reference to Figure 5 is stored. Figure 6 is described under reference to Figures 3 and 5 and the description thereof.

In Figure 6, a sequence of data similar to Figure 3 is shown. The sequence represents the order of elements 210 of the mesh 200 that are stored on the computer-readable storage medium 50. Therein, each element 210 is a data structure as described with reference to Figure 7.

Figure 7 shows a schematic of each of a root element 210, 215, of a mesh element 210, 211 and of a regular sibling 210, 212 of a mesh 200 as being comprised by a computer-readable storage medium 50 according to an aspect of the disclosure. The mesh 200 is described with reference to Figures 2, 3, 5 and 6. Figure 7 is described under reference to Figures 2, 3, 5 and 6 and the description thereof. Therein, the root element 210, 215, the mesh element 210, 211 and the regular sibling 210, 212 may be comprised by an arbitrary party chain 205, 206a, 206b of any party P1, P2, P3, P4.

The mesh 200 is a data structure. The mesh 200 comprises a plurality of elements 210, wherein each of the elements 210 is a sub data structure, i.e., a component, of the mesh 200. Elements 210 are schematically indicated in Figure 7. Therein, Figure 7 (A) illustrates the structure of the root element 210, 215, Figure 7 (B) illustrates the structure of the mesh element 210, 211 and Figure 7 (C) illustrates the structure of the regular sibling 210, 212. In addition to the data structure of the elements 210, each of Figures 7 (A), 7(B) and 7(C) shows a certificate chain, also called chain of trust, below the respective representation of the element 210.

Figure 7 (A) illustrates the root element 210, 215.

The root element 210, 215 comprises a party identity PID. The party identity PID is unique for the party P1, P2 being represented by the element 210, 215. The party identity PID may comprise a company name, a random number and/or a combination thereof.

The root element 210, 215 comprises an element unique identifier EUID. The element unique identifier EUID is unique for the element 210, 215 and accordingly generated for each element 210, 215.

The root element 210, 215 comprises a root public key RPK. The root public key RPK is adapted to validate a signature S being signed by a root certification authority RCA of the respective party P1, P2 being represented by the element 210, 215.

The root element 210, 215 comprises a neighbor hash NH as a hash value of an element 210 to which the root element 210, 215 is optionally be linked. The neighbor hash NH provides a verifiable and trustworthy evidence for a linked element 210. A hash calculation excludes the link values of the linked element 210 since these values may alter during the mesh usage.

The root element 210, 215 comprises a neighbor root hash NRH as a hash value of a root element 210, 216a, 216b to which the root element 210, 215 is optionally be linked. The neighbor root hash NRH provides a verifiable and trustworthy evidence for the linked root element 210, 216a, 216b. A hash calculation excludes the link values of the linked root element 210, 216a, 216b, since these values may alter during the mesh usage.

The root element 210, 215 comprises a timestamp TS. The timestamp TS indicates the element creation optionally using unified time-scheme.

The root element 210, 215 comprises properties P. A property may be an element characteristic according to network needs. The property P may comprise a search limit flag. The search limit flag of an element 210 may be set in accordance with a party P1, P2 to which the element 210 is linked. This may prevent the linked party to serve as a trust proxy, if another party chain 205, 206a may be reached over the linked element 210. The property P may comprise a device number of the device 500, 550 to which the element 210 relates and which may be used to limit a trust-relation in relation to the device 500, 550, instead of in relation to the party P1, P2. The property P may comprise a device certification authority identity and/or a device certification authority public key. This may limit the trust relationship to devices 500, 550 with device certificates DC being signed by the device certification authority DCA. Therein, the device certification authority DCA may be divided into a plurality of sub device certification authorities, which may be used to limit a trust relationship in the mesh 200 and which may enable a plurality of different links between neighboring party chains 205, 206a. This may enable a trust relationship between a set or a group of devices of one party and with a device certificate DC being signed by the respective sub device certification authorities to a device of another party. E.g., an electronic device 500 of a heavy truck as an example of a first vehicle 800a, 800b may establish a trust relationship with a second electronic device 550. However, a light truck may not establish a trust relationship with the second electronic device 550 which would require a further mesh element 210, 211 within the mesh 200. This may further enable a group-specific maintenance of trust relationships.

The root element 210, 215 comprises a signature S. The signature S is created by a root certification authority RCA with a root private key of the party P1, P2 being represented by the root element 210, 215 as schematically indicated by the arrow from the root certification authority RCA to the root public key RPK. The signature S is verifiable with a corresponding root public key of the root certification authority RCA as schematically indicated by the arrow from the root public key RPK to the signature S. Signature calculation excludes the link values of the element 210, since these values may alter during the mesh usage.

The root element 210, 215 comprises a plurality of links NRL, NL, SL. Links define the relationships between elements 210 and allow optimized navigation within the mesh 200. Therein, the root element 210, 215 comprises a neighbor link NL, i.e., a link to an element 210 of a different optionally trusted party chain 205, 206a, 206b, optionally a neighbor root link NRL, i.e., a link to a root element 210, 216a, 16b of a different (trusted) party-chain 205, 206a, 206b, and a sibling link SL, i.e., a link to the successor element of the same party chain 205, 206a, 206b. Therein, the sibling link SL may be set only after the creation of the successor element.

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

Figure 7 (B) illustrates the mesh element 210, 211. The mesh element 210, 211 is described with reference to the root element 210, 215 as described with reference to Figure 7 (A). Therein, the mesh element 210, 211 element comprises the party identity PID, the element unique identifier EUID, the neighbor hash NH, the neighbor root hash NRH, the timestamp TS, the properties P, the neighbor root link NRL, the neighbor link NL and the sibling link SL as explained above.

The mesh element 210, 211 comprises a mesh public key MPK. The mesh public key MPK is adapted to validate a signature S being signed by the mesh certification authority MCA of the respective party P1, P2 being represented by the element 210, 211.

The mesh element 210, 211 comprises a predecessor sibling hash PSH being a root hash RH, i.e., a hash value of the root element 210, 215 being a predecessor of the mesh element 210, 211.

The mesh element 210, 211 comprises a signature S. The signature S is created by a root certification authority RCA with a root private key of the party P1, P2 being represented by the mesh element 210, 211. The signature S is verifiable with a corresponding mesh public key of the mesh certification authority MCA, e.g., as being comprised by the mesh element 210, 211 as described with reference to Figure 7 (B).

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

Figure 7 (C) illustrates the regular sibling 210, 212. The regular sibling 210, 212 is described with reference to the mesh element 210, 211 as described with reference to Figure 7 (B). Therein, the regular sibling 210, 212 element comprises the party identity PID, the element unique identifier EUID, the neighbor hash NH, the predecessor sibling hash PSH, the neighbor root hash NRH, the timestamp TS, the properties P, the neighbor root link NRL, the neighbor link NL and the sibling link SL as explained above.

The regular sibling 210, 212 comprises a mesh public key MPK. The mesh public key MPK is adapted to validate a signature S being signed by the mesh certification authority MCA of the respective party P1, P2 being represented by the element 210, 212.

The regular sibling 210, 212 comprises a signature S. The signature S is created by a mesh certification authority MCA by using mesh private key of the party P1, P2 being represented by the mesh element 210, 212. The signature S is verifiable with a corresponding mesh public key of the mesh certification authority MCA, e.g., as being comprised by the root element 210, 215 as described with reference to Figure 7 (A).

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

The electronic device 500, 550 comprises the root certificate stored in a one-time-programmable memory. This may ensure the authenticity of the root certificate and the root public key RPK of the root element 210, 215 being referenced by the root certificate. The root public key RPK may be used to validate the mesh element 210, 211 by validating its signature S. The mesh public key MPK of a validated mesh element 210, 212 may be used to validate the regular sibling 210, 212 by validating its signature S. Via links NL, NRL to a neighbor party chain 206a, 206b, an element 210, e.g., the mesh element 210, 211 or the regular sibling 210, 212, may use the neighbor hashes NH, RNH and signatures S to validate an element 210 of the neighbor party chain 206a, 206b. Since the chain of trust is presented when a connection between devices 500, 550 of the parties P1, P2 is established by using a mesh 200 as explained with reference to Figure 2, the chain of trust of a second electronic device 550 of the second party P2 may be validated by assessing the root public key RPK and the signature S of the root certificate of the second electronic device 550 with the root public key RPK of the second root element 210, 216. This enables to validate the chain of trust including the device certificate DC. The connected devices 500, 550 may challenge each other to assess the correctness of a device private key.

Regular siblings 210, 212 comprises the hash of the party-chain predecessor which may be a mesh element 210, 211 or another regular sibling 210, 212. All regular siblings 210, 212 are signed by a mesh certification authority MCA, of the corresponding party P1, P2 and comprises a mesh certification authority MCA public key.

Optionally, one or more of the above-described data may be dispensed with and/or be void. For example, a sibling link of a last element 210 of a party chain 205, 206a, 206b may be void, since no successive element 210 in the party chain 205, 206a, 206b. Similarly, a neighbor root link NRL of a root element 210, 215 may be void, as the neighboring root element 210, 216a, 216b may be linked by another element 210 within the first party chain 205.

Figure 8 shows a schematic of a search method 600 according to an aspect of the disclosure. The search method 600 is a method for an electronic device 500 of a first party P1 to search a trust relationship with a second electronic device 550 of a second party P2, wherein the electronic device 500 comprises a memory 505 storing a mesh 200. Such a mesh 200 is described with reference to Figures 2, 3, 5 and 6. Figure 8 is described under reference to Figures 2, 3, 5 and 6 and the description thereof.

The search method 600 comprises the performance of the following steps:
Iterating 610, starting with the first root element 215 of the mesh 200, through the first party chain 205.

Following 620 any neighbor link NL of the elements 210 of the first party chain 205 to second elements 210 of the second party chain 206b.

Validating 630 the second elements 210 of the second party chain 206b.

Outputting 640 a trust relationship result.

Figure 9 shows a schematic of an update method 700 according to an aspect of the disclosure. The update method 700 is a method for an electronic device 500 of a first party P1 to update a public key infrastructure mesh 200. Such a mesh 200 is described with reference to Figures 2, 3, 5 and 6. Figure 8 is described under reference to Figures 2, 3, 5 and 6 and the description thereof.

The update method 700 comprises receiving 710, from a second electronic device 550 of a second party P2, a second mesh hash value MH of the mesh 200 being stored by the second electronic device 550.

Comparing 720 a first mesh hash value MH of the mesh 200 being stored by the electronic device 500 of the first party P1 and the second mesh hash value MH is performed.

Updating 730, based on comparing 720 the first mesh hash value MH with the second mesh hash value MH, the mesh 200 being stored by the electronic device 500 is performed. Therein, updating 730 the mesh 200 is performed, if the first mesh hash value MH and the second mesh hash value MH differ from each other. Otherwise, if the first mesh hash value MH and the second mesh hash value MH equal each other, updating 730 the mesh 200 is dispensed with. Updating 730 the mesh 200 may be performed with a string-matching algorithm and/or a variant thereof, optionally based on a representation of the mesh 200 as illustrated in Figures 3 or 6.

Figure 10 shows a schematic illustration of updating a mesh 200 as being comprised by a computer-readable storage medium 50 according to an aspect of the disclosure. Figure 10 is described under reference to Figure 9 and the description thereof.

Figure 10 shows schematically a first vehicle 800a, in particular utility vehicle 800b, of a first party P1 and a second vehicle 800a, in particular utility vehicle 800b, of a third party P3. In the following, a vehicle, in particular utility vehicle, is referred to as vehicle. The vehicle is a land vehicle.

The first vehicle 800a, 800b is a truck. The second vehicle 850a, 850b is a trailer. Each of the first vehicle 800a, 800b and second vehicle 850a, 850b comprises an electronic device 500, 550 (not shown) which stores a mesh 200 as described with respect to Figure 2, 3, 5 and 6.

In Figure 10, the mesh 200 of the first vehicle 800a, 800b is different from the mesh 200 of the second vehicle 850a, 850b. The meshes 200 are characterized by different mesh hash values MH. The mesh 200 of the second vehicle 850a, 850b is assumed to be newer than mesh 200 of the first vehicle 800a, 800b. The mesh 200 of the first vehicle 800a, 800b represents a trust relationship between the first party P1 and the second party P2. The mesh 200 of the second vehicle 850a, 850b represents a trust relationship between the first party P1, the second party P2 and the third party P3.

The indicated update is performed infield via communication between the first vehicle 800a, 800b and the second vehicle 850a, 850b. A first operation identifies if the mesh version of the mesh 200 of the second vehicle 850a, 850b presented to the in-field device 500, 550 of the first vehicle 800a, 800b or of the backend 400, 410 is newer than the currently stored version of the mesh 200. After validation, the currently stored version will be replaced by the newer one as explained below.

First, a connection between the first vehicle 800a, 800b and the second vehicle 850a, 850b is established. The first vehicle 800a, 800b and the second vehicle 850a, 850b start communication and agree to apply a mesh authentication approach. Both devices exchange mesh hash values MHV and detect, that the meshes 200 are not identical. Both devices exchange their mesh 200. Both devices validate the received mesh 200. The first vehicle 800a, 800b updates its internal mesh 200 since structure version provided by second vehicle 850a, 850b is comprehensive. The trailer is up to date, so no action needs to be performed here. Subsequently, a mutual authentication of the devices is performed successfully as indicated by the check and the double-arrow between the first vehicle 800a, 800b and the second vehicle 850a, 850b. Now, the first vehicle 800a, 800b and the second vehicle 850a, 850b are enabled to establish a secure communication.

However, the update strategy and other mesh operations may require significant memory resources. Low-performance devices with limited memory resources might not be able to participate on the approach. Different strategies may be applied to reduce the memory consumption of the method: the mesh operations may be performed by a high performance computing, HPC, unit of the vehicle 800a, 800b, 850a, 850b and/or a gateway device with enhanced memory resources, the mesh operations may be executed as remote service located on the HPC unit and/or gateway, the mesh 200 may be stored on the HPC unit and/or gateway, the mesh 200 may be limited, i.e., the number of elements 210 in the mesh may be limited by storing only the own party chain 205, 206a, 206 and/or a relevant mesh-path, i.e. linked subset of the mesh 200 starting with the limited device' root element 210, 215 provided by the communication partner. However, a limited mesh 200 may not participate on the mesh updates dispersion. Alternatively, it is possible to maintain the full mesh 200 on the limited device but reduce stored 3rd party mesh elements 210 to links, hash values and properties.

Figure 11 shows a schematic illustration of merging a mesh 200 as being comprised by a computer-readable storage medium 50 according to an aspect of the disclosure. Figure 11 is described with reference to Figure 10 and the description thereof, wherein the second vehicle 850a, 850b is a vehicle 850a, 850b of the second party P2.

In Figure 11, the mesh 200 of the first vehicle 800a, 800b is different from the mesh 200 of the second vehicle 850a, 850b. The meshes 200 are characterized by different mesh hash values MH. The mesh 200 of the first vehicle 800a, 800b represents a trust relationship between the first party P1 and the second party P2 and between the first party P1 and a fourth party P4. The mesh 200 of the second vehicle 850a, 850b represents a trust relationship between the first party P1, the second party P2 and the third party P3.

If the mesh 200 presented by the second vehicle 850a, 850b to the device or backend of the first vehicle 800a, 880b contains new branches but also missing branches known by the device or backend first vehicle 800a, 880b, the merging integrates missing branches into the mesh 200.

The indicated merging is performed infield via communication between the first vehicle 800a, 800b and the second vehicle 850a, 850b. First, a connection between the first vehicle 800a, 800b and the second vehicle 850a, 850b is established. The first vehicle 800a, 800b and the second vehicle 850a, 850b start communicating. As indicated in the mesh 200: both vehicles 800a, 800b, 850a, 850b have direct trusted relationship so that authentication would be possible but may not performed yet. Both devices 500, 550 exchange mesh hash values MH and recognize that the meshes 200 are not identical. Both devices 500, 550 exchange the mesh 200. The devices 500, 550 validate the received meshes 200 and update its internal mesh 200, with missing elements (branches). The memory storage serialization is performed upon the elements timestamp, so the resulting memory representation of the mesh 200 is identical for both devices 500, 550. In case of identical timestamp TS, the sorting can be done upon an element unique identifier EUID absolute value. Subsequently, a mutual authentication of the devices 500, 550 is performed successfully as indicated by the check and the double-arrow between the first vehicle 800a, 800b and the second vehicle 850a, 850b.

### List of reference signs (Part of the description)

- 50: storage medium

- 100: method for a backend of a first party
- 105: transmitting mesh
- 110: receiving updated mesh
- 115: validating updated mesh
- 120: transmitting second updated mesh

- 200: mesh
- 200': updated mesh
- 200": first updated mesh
- 200‴: second updated mesh

- 201: host party
- 202a: guest party
- 202b: guest party
- 205: party chain
- 206a: party chain
- 206b: party chain
- 210: element
- 211: mesh element
- 212: regular sibling
- 215: root element
- 216a: root element
- 217: last element of first party chain
- 218a: second last element, last element of second party chain
- 219: first linked element
- 220a: second linked element

- 300: method for a backend of a second party
- 305: receiving mesh
- 310: validating mesh
- 320: transmitting updated mesh
- 325: receiving second updated mesh
- 330: validating second updated mesh

- 400: backend of first party
- 410: backend of second party

- 500: electronic device
- 505: memory
- 550: second electronic device
- 555: memory

- 600: search method
- 610: iterating
- 620: following
- 630: validating
- 640: outputting

- 700: update method
- 710: receiving
- 720: comparing
- 730: updating

- 800a: vehicle
- 800b: utility vehicle
- 850a: vehicle
- 850b: utility vehicle

- RCA: root certification authority
- MCA: mesh certification authority
- DCA: device certification authority
- DC: device certificate

- NL: neighbor link
- NRL: neighbor root link
- SL: sibling link

- NH: neighbor hash
- NRH: neighbor root hash
- PSH: predecessor sibling hash
- RH: root hash

- MH: mesh hash value

- EUID: element unique identifier
- PID: party identity
- P: properties
- PK: public key
- MPK: mesh public key
- RPK: root public key
- S: signature
- TS: timestamp

- P1: party
- P2: party
- P3: party
- P4: party

## Claims

1. A computer-readable medium (50) comprising a mesh (200) with a public key infrastructure relating to trust relationships between a first party (P1) and a second party (P2), wherein the mesh (200) comprises:
- a first party chain (205) representing the first party (P1) and comprising a first root element (210, 215), a first mesh element (210, 211) and a first element (210);
- a second party chain (206a) representing the second party (P2) and comprising a second root element (210, 216a) and a second element (210, 218a); wherein
- each of the root elements (210, 215, 216a) comprises a signature (S) signed by a root certification authority (RCA) of the respective party (P1, P2) and a corresponding root public key (RPK) for validating signatures (S);
- the first mesh element (210, 211) comprises a signature (S) signed by the root certification authority (RCA) of the first party (P1), a mesh public key (MPK) for validating a signature (S) signed by a mesh certification authority (MCA) of the first party (P1) and a predecessor sibling hash (PSH) of the first root element (210, 215);
- the first element (210) comprises a signature (S) signed by the mesh certification authority (MCA) of the first party (P1), the mesh public key (MPK), a predecessor sibling hash (PSH) of a preceding element (210) in the first party chain (205), and a neighbor link (NL) to a second linked element (220a) of the second party chain (206a); and
- the second element (210, 218a) comprises a neighbor link (NL) to a first linked element (210) of the first party chain (205).

2. A computer-readable medium (50) as claimed in claim 1, wherein the first element (210) is a regular sibling (210, 212), wherein the regular sibling (210, 212) comprises a signature (S) signed by the mesh certification authority (MCA) of the first party (P1), a mesh public key (MPK) and a predecessor sibling hash (PSH).

3. A computer-readable medium (50) as claimed in claim 1 or 2, wherein the first element (210) comprises a neighbor root link (NRL) to the second root element (210, 216a) and/or the second element (210, 218a) comprises a neighbor root link (NRL) to the first root element (210, 215).

4. A computer-readable medium (50) as claimed in claim 1 or 2, wherein the second linked element (220a) is the last element (210, 218a) of the second party chain (206a).

5. A computer-readable medium (50) as claimed in any one of the preceding claims, wherein the first element (210) comprises a neighbor link hash (NLH) of the second linked element (220a) and/or a neighbor root hash (NRH) of the second root element (210, 216a).

6. Method (100) for a backend (400) of a first party (P1) for managing trust relationships between the first party (P1) and a second party (P2) in a mesh (200) as claimed in any one of the preceding claims, wherein the method (100) comprises:
- transmitting (105), to a backend (410) of the second party (P2), the mesh (200);
- receiving (110), from the backend (410) of the second party (P2), an updated mesh (200'), wherein the updated mesh (200') comprises the mesh (200) and a second last element (218a) of the second party chain (206a), wherein the second last element (218a) comprises a neighbor link (NL) to a last element (210, 217) of the first party chain (205) within the updated mesh (200');
- validating (115) the updated mesh (200'); and
- transmitting (120), to the backend (410) of the second party (P2), a second updated mesh (200") with the updated mesh (200') and a further element (210) representing the first party (P1), becoming the last element (210, 217) of the first party chain (205) within the second updated mesh (200") and comprising a neighbor link (NL) to second last element (218a) of the second party chain (206a).

7. Method (300) for a backend (410) of a second party (P2) for managing relationships between a first party (P1) and the second party (P2) in a mesh (200) as claimed in any one of claims 1 to 5, wherein the method (300) comprises:
- receiving (305), from the backend (400) of the first party (P1), the mesh (200);
- validating (310) the mesh (200);
- transmitting (320), to the backend (400) of the first party (P1), an updated mesh (200') with a second last element (218a) of the second party chain (206a) wherein the second last element (218a) comprises a neighbor link (NL) to a last element (210, 217) of the first party chain (205) within the updated mesh (200');
- receiving (325), from the backend (400) of the first party (P1), a second updated mesh (200") with the updated mesh (200') and a further element (210) representing the first party (P1), becoming the last element (210, 217) of the first party chain (205) within the second updated mesh (200") and comprising a neighbor link (NL) to second last element (218a) of the second party chain (206a); and
- validating (330) the second updated mesh (200").

8. Computer program for a backend (400, 410), comprising instructions which, when the program is executed by a processor, causes the processor to carry out the method (100, 300) of claim 6 or 7.

9. Backend (400, 410), wherein the backend (400, 410) is adapted to perform the method (100, 300) as claimed in claim 6 or 7.

10. Search method (600) for an electronic device (500) of a first party (P1) to search a trust relationship with a second electronic device (550) of a second party (P2), wherein the electronic device (500) comprises a memory (505) storing a mesh (200) as claimed in any one of claims 1 to 5, wherein the search method (600) comprises:
- iterating (610), starting with the first root element (210, 215) of the mesh (200), through the first party chain (205);
- following (620) any neighbor link (NL) of the elements (210) of the first party chain (205) to second elements (210) of the second party chain (206b);
- validating (630) the second elements (210) of the second party chain (206b), and
- outputting (640) a trust relationship result.

11. Update method (700) for an electronic device (500) of a first party (P1) to update a public key infrastructure mesh (200) as claimed in any one of claims 1 to 5, wherein the update method (700) comprises:
- receiving (710), from a second electronic device (550) of a second party (P2), a second mesh hash value (MH) of the mesh (200) being stored by the second electronic device (550);
- comparing (720) a first mesh hash value (MH) of the mesh (200) being stored by the electronic device (500) of the first party (P1) and the second mesh hash value (MH); and
- updating (730), based on comparing (720) the first mesh hash value (MH) with the second mesh hash value (MH), the mesh (200) being stored by the electronic device (500).

12. Computer program for an electronic device (500, 550), comprising instructions which, when the program is executed by a processor, causes the processor to carry out the method (600, 700) of claim 10 or 11.

13. Electronic device (500, 550), comprising and/or being adapted to read a computer-readable medium (50) comprising a mesh (200) as claimed in any one of claims 1 to 5.

14. Electronic device (500, 550) as claimed in claim 13, wherein the electronic device (500, 550) is adapted to perform the method (600, 700) as claimed in claims 10 or 11.

15. First vehicle (800a), in particular utility vehicle (800b), of a first party (P1), wherein the first vehicle (800a), in particular utility vehicle (800b), comprises an electronic device (500, 550) as claimed in claim 13 or 14.
